# EUROPEAN PATENT APPLICATION

(11) **EP 3 632 963 A1**
(43) Date of publication of application: **08.04.2020**
(21) Application number: 18810661.1
(22) Date of filing: 01.06.2018
(51) Int. Cl.: C08J 3/12, C08L 29/04

(54) **POLYVINYL ALCOHOL RESIN COMPOSITION PELLETS AND METHOD FOR PRODUCING SAID POLYVINYL ALCOHOL RESIN COMPOSITION PELLETS**

(30) Priority: 02.06.2017 JP 2017110412
(71) Applicant: Mitsubishi Chemical Corporation, Tokyo 100-8251 (JP)
(72) Inventor: FUKAMACHI, Yuya, Tokyo 100-8251 (JP); SAKAI, Norihito, Tokyo 100-8251 (JP)
(74) Representative: Kuhnen & Wacker Patent- und Rechtsanwaltsbüro PartG mbB
(86) International application number: PCT/JP2018/021281
(87) International publication number: WO 2018/221743

(57) **Abstract**

An object of the present invention is to provide polyvinyl alcohol resin composition pellets in which coloring is small and hardness characteristics are improved. The present invention relates to polyvinyl alcohol resin composition pellets, which comprise a polyvinyl alcohol resin, and have hardness of 100 N or more at 23°C and 50% RH, and a yellow index value of 50 or less after being heated at 210°C and pressed at 5 kgf/cm² for two minutes.

## Description

### Technical Field

The present invention relates to polyvinyl alcohol resin composition pellets and a method of producing the polyvinyl alcohol resin composition pellets.

### Background Art

In the related art, a hydrophobic thermoplastic resin is pelletized by: extruding the thermoplastic resin into strands by melt-kneading; cooling the strands by using a water-contact cooling method (immersion in water); and then cutting the strands into pellets with a cutting device, and the obtained pellets are used for various molding materials. Thus, the thermoplastic resin exhibiting hydrophobicity may be cooled by the water-contact cooling method as described above, and pellets can also be easily produced.

However, in the case of producing pellets, when polyvinyl alcohol (hereinafter, may be referred to as "PVA"), which is a water-soluble resin, is melt-kneaded, extruded into strands, and cooled by water-contact cooling with a water tank or the like, the polyvinyl alcohol is dissolved. Thus, cooling cannot be effectively performed, and it is difficult to cut the melt-extruded strands into pellets.

For this reason, various pelletization of the PVA resin, which is a water-soluble resin, have been studied. For example, there has been proposed a production method of efficiently cooling a strand with a fog or the like, a method of cooling a strand directly with a water-cooled stainless belt, a method of cooling a strand by applying cool air from a close distance, and a production method of performing cooling when cutting the strand by a method such as applying cool air into a pelletizer and cooling a blade with water (see, for example, Patent Document s 1 and 2.).

### Related Art

### Patent Document

Patent Document 1: JP-A-2015-214651
Patent Document 2: JP-A-2015-214652

### Summary of Invention

### Problems to Be Solved by the Invention

However, it is very difficult to efficiently produce pellets of the PVA resin because the cooling effect caused by air cooling or the like is low compared with the case where strands are directly immersed in water and cooled.

Moreover, the PVA resin is generally a powder after the production, and when the powdered PVA resin is supplied to a melt molding machine such as an extruder, it is difficult to make the powdered PVA resin in a uniform molten state and to produce a molded product such as a film due to the influence of volatile components and particle size. Therefore, the PVA resin powders have been melt-kneaded, pelletized, and then melt-molded in the related art.

Moreover, the pellets of the PVA resin produced by melt-kneading may be mixed with heat-colored or deteriorated products. In the case of forming a molded product using the pellets, thermal degradation of the PVA resin further proceeds during melt-molding, which may cause poor appearance of the molded product due to coloring, or may cause fish eyes during formation of films. In particular, an accurate color may not be obtained in a molded product to be colored when the color of the resin before coloring is strong.

Moreover, the pellets of the PVA resin are required to have a certain degree of hardness. When the hardness of the PVA resin is low, the resin may become powdery with a screw during melt-molding and the resin may not be extruded by the screw, or the pulverized resin may cause fish eyes of the molded product. Moreover, the pellets are likely to crush even when the pellets are transported.

The present invention has been made in view of the above conditions in the related art. An object of the present invention is to provide polyvinyl alcohol resin composition pellets in which coloring is small and hardness characteristics are improved.

### Means for Solving the Problems

As a result of intensive studies, the present inventors have found that the above problems can be solved by using pellets having specific hardness and a yellow index value (hereinafter, may be referred to as a "YI value"), and thus they have accomplished the present invention.

That is, the present invention relates to the following <1> to <4>.
<1> Polyvinyl alcohol resin composition pellets, which comprise a polyvinyl alcohol resin, and have hardness of 100 N or more at 23°C and 50% RH, and a yellow index value of 50 or less after being heated at 210°C and pressed at 5 kgf/cm² for two minutes.
<2> The polyvinyl alcohol resin composition pellets described in <1>, wherein the polyvinyl alcohol resin has a saponification degree of 70 mol% or more.
<3> The polyvinyl alcohol resin composition pellets described in <1> or <2>, further comprising a plasticizer in an amount of 0.1 to 8 parts by mass relative to 100 parts by mass of polyvinyl alcohol resin.
<4> A method of producing polyvinyl alcohol resin composition pellets, the method comprising a step of compressing polyvinyl alcohol resin powders with a bulk specific gravity of 0.60 to 0.80 g/ml and performing cutting.

### Effects of the Invention

According to the present invention, there is provided polyvinyl alcohol resin composition pellets having both two characteristics: low coloring properties and high hardness. Therefore, in production of the polyvinyl alcohol resin composition pellets of the present invention, it is possible to ensure long-run properties in mass production and to perform stable continuous operation and production. Moreover, when the obtained pellets are used as a molded product, appearance of the molded product can be further improved. Further, when the molded product is colored, an accurate color can be imparted.

Such pellets are generally used as raw materials for melt-molding.

### Embodiments for Carrying Out the Invention

The present invention will be described in detail below.

PVA resin composition pellets of the present invention comprises a PVA resin, have hardness of 100 N or higher at 23°C and 50% RH, and have a yellow index value of 50 or less after being heated at 210°C and pressed at 5 kgf/cm² for two minutes.

### [PVA Resin]

First, the PVA resin used in the present invention will be described.

The PVA resin is a resin containing a vinyl alcohol structural unit as a main component, which is obtained by saponifying a polyvinyl ester resin obtained by polymerization of vinyl ester monomers. The PVA resin contains a vinyl alcohol structural unit, whose content corresponds to a saponification degree, and also contains a vinyl ester structural unit remaining without being saponified when the saponification degree is not 100 mol%.

Examples of the above vinyl ester monomers include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, and the like, and vinyl acetate is preferably used from the economical point.

The bulk specific gravity of the PVA resin used in the present invention is preferably 0.60 to 0.80 g/ml, more preferably 0.63 to 0.75 g/ml, and still more preferably 0.65 to 0.70 g/ml. The bulk specific gravity can be measured by an apparent specific gravity measurement method in accordance with JIS K6892.

When the bulk specific gravity is too large, the PVA resin tends to harden in a device due to pressure, generate heat, melt and solidify, and thus the PVA resin composition pellets tend not to be efficiently produced continuously. When the bulk specific gravity is too small, the PVA resin cannot be efficiently compressed in the device, and thus obtained pellets tend to have low hardness.

Examples of a method of obtaining the PVA resin having the above bulk specific gravity include: (i) a method of pulverizing the PVA resin after the PVA resin is obtained; (ii) a method of performing stirring when the vinyl ester polymer is saponified; (iii) a method of performing stirring and pulverization when the PVA resin is dried; and the like. Among these, the method (ii) is preferred in that the step is simple and efficient.

The average polymerization degree of the PVA resin used in the present invention (measured in accordance with JIS K 6726) is generally 150 to 4000, preferably 200 to 2000, more preferably 250 to 800, and still more preferably 300 to 600.

In a pelletization method used in the present invention, a raw material powder of the PVA resin can be pelletized without any problem even if the average polymerization degree of the PVA resin is low or high. However, in case that the obtained pellets are placed in a melt-molding machine, when the average polymerization degree is too high, the PVA resin tends to thermally decompose due to shear heating, and when the average polymerization degree is too low, melt viscosity is too low and the PVA resin may not be knead.

The saponification degree of the PVA resin used in the present invention is generally 70 mol% or higher, preferably 72 to 99.5 mol%, and particularly preferably 85 to 98.5 mol%. When the saponification degree is too low, the pellets may become too soft. When the saponification degree is too high, water solubility of the PVA resin tends to decrease.

In the present specification, the saponification degree of the PVA resin is measured in accordance with JIS K 6726.

The melting point of the PVA resin is generally 150 to 230°C, preferably 170 to 220°C, and particularly preferably 180 to 200°C. When the melting point is too high, adhesion of the PVA resin is low when compressing the powder and the PVA resin tends not to harden well. When the melting point is too low, the PVA resin melts due to shear heating during compression and the powder becomes a thin plate-shaped product, which may cause the device to stop due to load.

In the case of a normal PVA resin, a bonding mode of the main chain is mainly 1,3-diol bond, and the content of 1,2-diol bond is about 1.5 to 1.7 mol%. Alternatively, the content of 1,2-diol bond can be increased by increasing polymerization temperature during polymerization of the vinyl ester monomers, and the content thereof can be 1.8 mol% or more, and more preferably 2.0 to 3.5 mol%.

In the present invention, as the PVA resin, a copolymerized modified PVA resin, which is obtained by copolymerizing various monomers with vinyl ester monomers during production of a vinyl ester resin and saponifying the obtained copolymers, and a post-modified PVA resin, which is obtained by introducing various functional groups into the unmodified PVA by post-modification, can be used. Such modification can be performed as long as the water solubility of the PVA resin is not lost, and is generally less than 20 mol%.

Examples of the monomers used for copolymerization with the vinyl ester monomers include olefins such as ethylene, propylene, isobutylene, α-octene, α-dodecene, α-octadecene, unsaturated acids, such as acrylic acid, methacrylic acid, crotonic acid, maleic acid, maleic anhydride, itaconic acid, or salts, mono- or dialkyl esters thereof, nitriles such as acrylonitrile and methacrylonitrile, amides such as acrylamide and methacrylamide, olefin sulfonic acids, such as ethylene sulfonic acid, allyl sulfonic acid, and methallyl sulfonic acid, or salts thereof, alkyl vinyl ethers, N-acrylamidomethyltrimethylammonium chloride, allyltrimethylammonium chloride, dimethylallyl vinyl ketone, N-vinylpyrrolidone, vinyl chloride, vinylidene chloride, polyoxyalkylene (meth)allyl ethers such as polyoxyethylene (meth)allyl ether and polyoxypropylene (meth)allyl ether, polyoxyalkylene (meth)acrylates such as polyoxyethylene (meth)acrylate and polyoxypropylene (meth)acrylate, polyoxyalkylene (meth)acrylamides such as polyoxyethylene (meth)acrylamide and polyoxypropylene (meth)acrylamide, polyoxyethylene (1-(meth)acrylamide-1,1-dimethylpropyl) ester, polyoxyethylene vinyl ether, polyoxypropylene vinyl ether, polyoxyethylene allylamine, polyoxypropylene allylamine, polyoxyethylene vinylamine, polyoxypropylene vinylamine, hydroxy group-containing α-olefins, such as 3-buten-1-ol, 4-penten-1-ol, and 5-hexen-1-ol, and acylated derivatives thereof.

In addition, examples of the post-modified PVA resins obtained by introducing functional groups by post-reaction may include those having an acetoacetyl group by the reaction with diketene, those having a polyalkylene oxide group by the reaction with ethylene oxide, those having a hydroxyalkyl group by the reaction with an epoxy compound, or those obtained by reacting aldehyde compounds having various functional groups with the PVA resin, and the like.

The modification amount of the modified PVA resins, i.e., constituting units derived from various monomers in the copolymers or the functional groups introduced by the post-reaction is not categorically specified since properties remarkably vary depending on the modification species, and is generally in a range of 0.1 to 20 mol% and particularly preferably in a range of 0.5 to 12 mol%.

Among these various modified PVA resins, in the present invention, preferred are PVA resins having a primary hydroxyl group at the side chain and ethylene-modified PVA resins, particularly preferred are the PVA resins having a primary hydroxyl group at the side chain in view of excellent melt moldability, among which preferred is a PVA resin having a 1,2-diol structure at the side chain.

In particular, the PVA resin having a 1,2-diol structure at the side chain, which is represented by the following general formula (1), is preferred from the viewpoint of high melt moldability.

In the general formula (1), R¹, R², and R³ each independently represent a hydrogen atom or an alkyl group having 1 to 4 carbon atoms, X represents a single bond or a linking chain, and R⁴, R⁵, and R⁶ each independently represent a hydrogen atom or an alkyl group having 1 to 4 carbon atoms.

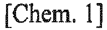

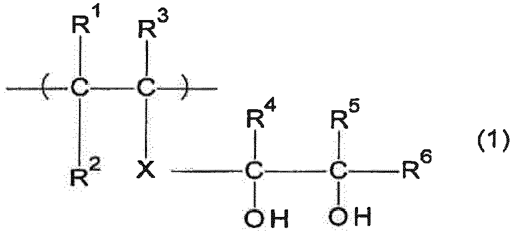

The content (modification ratio) of the 1,2-diol structural unit, which is represented by the general formula (1), of the PVA resin having a 1,2-diol structure at the side chain is generally 0.1 to 20 mol%, preferably 0.5 to 12 mol%, still more preferably 2 to 9 mol%, and particularly preferably 3 to 8 mol%. When the modification ratio is too low, mutual adhesion between the powders tends to decrease, and when the modification ratio is too high, melt solidification of the powders tends to occur and continuous pelletization of the powders tends to be difficult.

The moiety other than the 1,2-diol structural unit is a vinyl alcohol structural unit and a vinyl ester structural unit of unsaponified moieties, similarly to a general PVA resin.

Each of R¹ to R³ and R⁴ to R⁶ in the 1,2-diol structural unit represented by the general formula (1) is preferably a hydrogen atom from the viewpoint that the terminal of the side chain becomes a primary hydroxyl group and the reactivity is further improved, but may be substituted with an alkyl group having 1 to 4 carbon atoms as long as the amount of the alkyl group having 1 to 4 carbon atoms does not significantly impair resin properties. Examples of the alkyl group having 1 to 4 carbon atoms include a methyl group, an ethyl group, an n-propyl group, an isopropyl group, an n-butyl group, an isobutyl group, a tert-butyl group, and the like. The alkyl group having 1 to 4 carbon atoms may have a substituent such as a halogen group, a hydroxyl group, an ester group, a carboxylic acid group, and a sulfonic acid group, if necessary.

Moreover, X in the 1,2-diol structural unit represented by the general formula (1) is most preferably a single bond in view of thermal stability and stability under high temperature or under acidic conditions. Alternatively, X may be a linking chain within the range where the effect of the present invention is not inhibited. Such a linking chain includes hydrocarbons such as alkylene, alkenylene, alkynylene, phenylene, and naphthylene (these hydrocarbons may be substituted with halogen(s) such as fluorine, chlorine, and/or bromine), as well as -O-, -(CH₂O)ₘ-, -(OCH₂)ₘ-, -(CH2O)ₘCH₂-, -CO-, -COCO-, -CO(CH₂)ₘCO-, -CO(C₆H₄)CO-, -S-, -CS-, -SO-, -SO₂-, -NR-, -CONR-, -NRCO-, -CSNR-, -NRCS-, -NRNR-, -HPO₄-, -Si(OR)₂-, -OSi(OR)₂-, -OSi(OR)₂O-, -Ti(OR)₂-, -OTi(OR)₂-, -OTi(OR)₂O-, -Al(OR)-, -OAl(OR)-, -OAl(OR)O- and the like (each R is independently any substituent, preferably a hydrogen atom or an alkyl group, and m is an integer of 1 to 5). Among them, an alkylene group having 6 or less carbon atoms is preferred, and methylene group or -CH₂OCH₂- is particularly preferred, from the viewpoint of stability in production or in use.

A method of producing the PVA resin having a 1,2-diol structure at the side chain is not particularly limited, and preferably used are (i) a method of saponifying a copolymer of a vinyl ester monomer and a compound represented by the following general formula (2); (ii) a method of saponifying and decarboxylating a copolymer of a vinyl ester monomer and a compound represented by the following general formula (3); and (iii) a method of saponifying and deketalizing a copolymer of a vinyl ester monomer and a compound represented by the following general formula (4). For example, the above PVA resin can be produced by a method described in paragraphs [0011] to [0019] of JP-A-2004-285143.

All of R¹, R², R³, X, R⁴, R⁵, and R⁶ in the following general formulas (2), (3) and (4) are the same as in the case of the general formula (1). Moreover, R⁷ and R⁸ each independently represent a hydrogen atom or R⁹-CO- (in which R⁹ is an alkyl group). R¹⁰ and R¹¹ each independently represent a hydrogen atom or an alkyl group having 1 to 4 carbon atoms.

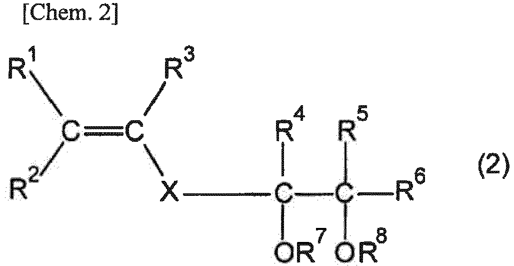

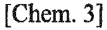

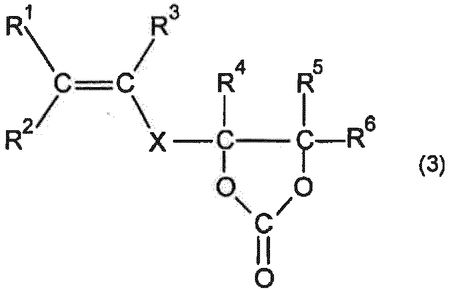

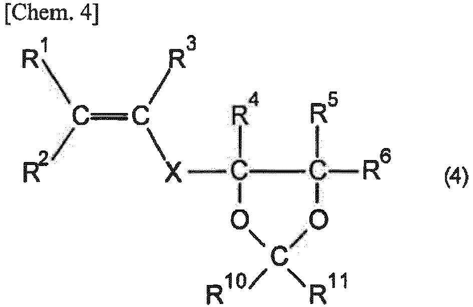

Moreover, the PVA resin (A) for use in the present invention may be one kind thereof or a mixture of two or more kinds thereof. In that case, use can be made of combinations of the aforementioned unmodified PVA resins themselves, the unmodified PVA and a PVA resin having a structural unit represented by the general formula (1), PVA resins themselves having a structural unit represented by the general formula (1) different in saponification degree, average polymerization degree, and modification degree, unmodified PVA, or a PVA resin having a structural unit represented by the general formula (1) and other modified PVA resin(s), and the like.

### [Plasticizer]

The PVA resin composition pellet of the present invention may contain a plasticizer.

Examples of the plasticizer include compounds obtained by adding ethylene oxide to polyhydric alcohol such as aliphatic polyhydric alcohols (e.g., ethylene glycol, hexanediol, glycerin, trimethylolpropane, and diglycerin), various alkylene oxides (e.g., ethylene oxide, propylene oxide, and mixed adducts of ethylene oxide and propylene oxide), saccharides (e.g., sorbitol, mannitol, pentaerythritol, xylol, arabinose, and ribulose), phenolic derivatives such as bisphenol A and bisphenol S, amide compounds such as N-methylpyrrolidone, glucosides such as α-methyl-D-glucoside, and the like.

The blending amount of the plasticizer is preferably 0.1 to 8 parts by mass, more preferably 1 to 7 parts by mass, and still more preferably 2 to 6 parts by mass, relative to 100 parts by mass of PVA resins. When the content of the plasticizer is too small, the adhesion between the powders of the PVA resin tends not to be obtained, and when the content of the plasticizer is too large, the adhesion between the powders tends to decrease.

### [Other Components]

The PVA resin composition pellets of the present invention may contain an additive in addition to the PVA resin and the plasticizer. For example, additives, such as thermoplastic resins (eg., polyethylene, polypropylene, polyester in the presence of compatibilizers), perfume, foaming agents, deodorants, extenders, fillers (eg., inorganic fillers such as talc, clay, montmorillonite, calcium carbonate, glass beads, glass fiber, silica, mica, alumina, hydrotalcite, titanium oxide, zirconium oxide, boron nitride, and aluminum nitride, organic fillers such as melamine-formalin resins), removers, UV absorbers, antioxidants, processing stabilizers, weather resistance stabilizers, fungicides, and preservatives, may be blended as appropriate.

### [PVA Resin Composition Pellet]

The PVA resin composition pellets of the present invention have hardness of 100 N or more at 23°C and 50% RH, and a YI value of 50 or less after being heated at 210°C and being pressed at 5 kgf/cm² for two minutes.

### (Hardness)

The hardness of the PVA resin composition pellets of the present invention is a hardness measured by a tablet hardness tester (trade name: PC-30, manufactured by Okada Seiko.Co.,Ltd.) at a condition of 23°C and 50% RH.

The hardness of the PVA resin composition pellets of the present invention is required to be 100 N or more, preferably 150 N or more, and more preferably 300 N or more, so that a shape of the pellets does not easily collapse and the pellets become kneaded when kneaded in a screw such as an injection molding machine or a single screw extruder, or the shape of the pellets does not collapse when transported by a packaging bag. The upper limit is about 1000 N.

In order to set the hardness of the PVA resin composition pellets of the present invention to 100 N or more, (i) a method in which pressure is applied to a PVA resin having a specific bulk specific gravity to mold the PVA resin, and (ii) a method in which a binder resin is contained in the PVA resin composition to mold the PVA resin can be mentioned, and the method (i) is preferred from the viewpoint that there are few components other than the PVA resin in the PVA resin composition pellets.

### (YI value)

The YI value of the PVA resin composition pellets of the present invention is a YI value after heating and pressing the PVA resin composition pellets of the present invention by a hot pressing machine.

Specifically, temperature of upper and lower press plates of the hot pressing machine were set to 210°C and pressure thereof was set to 5 kgf/cm² to perform heating and pressing for two minutes, a plate of 2 cm × 5 cm × 2 mm was prepared, and the YI value of the plate was measured by a color difference meter (trade name: Spectrometer V-7200, manufactured by JASCO Corporation), thereby determining the YI value of the PVA resin composition pellets of the present invention.

The YI value of the PVA resin composition pellets of the present invention is an index of coloring, and is 50 or less, preferably 30 or less, and more preferably 25 or less, from the viewpoint of coloring with other colors. It should be noted that the lower limit is generally 0.

In order to set the YI value of the PVA resin composition pellet of the present invention to 50 or less, it is preferable to reduce the heat applied to the PVA resin. When the heat is applied to the PVA resin, terminal structures of the PVA resin undergo dehydration or deacetic acid reaction, and a vinylene group is generated at the main chain. It is considered that such a vinylene group is one of the causes for increasing the YI value.

Moreover, the molecular chain of the PVA resin is cut when heat is applied, and thus the number of terminal structures of the PVA resin chain is increased. Further, when a vinylene group is generated on the terminal structure, the YI value increases. Therefore, the YI value decreases by reducing the heat applied to the PVA resin.

Examples of the shape of the PVA resin composition pellets of the present invention include a columnar shape and a prismatic shape, and the columnar shape is preferred from the viewpoint of ease of production.

In the case of the size of the columnar shape, the length is 0.5 to 5.0 mm, preferably 1.0 to 3.0 mm, and the diameter is 1.0 to 3.0 mm, preferably 1.5 to 2.5 mm. When the size is too large, a torque abnormality of the extruder tends to occur, and when the size is too small, it tends to cause unmelting.

### [Method of Producing PVA Resin Composition Pellets]

Examples of a method of producing the PVA resin composition pellets of the present invention include: (i) a method in which PVA resin powders are compressed under pressure, and cutting is performed; (ii) a method in which an aqueous PVA resin solution is poured into a mold, dried, molded and cut; and (iii) a method in which a binder resin is contained in the PVA resin composition to mold the PVA resin, and the method (i) is preferred from the viewpoint of production efficiency, moldability and the YI value.

The method (i) is described in detail below.

The method (i) preferably has the following steps.
(1) Mixing step
(2) Granulation step
(3) Drying step

First, the mixing step (1) is described. The mixing step is a step for mixing materials of the PVA resin pellet with a mixer and making the materials uniform.

Examples of the mixer used in the mixing step include a ribbon blender, a Nauta mixer, a Henschel mixer, and the like, and the Henschel mixer is preferred from the viewpoint of mixing properties.

The rotational speed of the mixer varies depending on the capacity and the type of a mixer and the type of a stirring blade, and is generally 10 to 1000 rpm, preferably 100 to 800 rpm. When the rotational speed is too slow, mixing of the materials tends to be insufficient, and when the rotation speed is too fast, the material tends to scatter.

The mixing time varies depending on the capacity and the type of a mixer and the type of a stirring blade, and is generally 5 to 60 minutes, preferably 10 to 30 minutes. When the mixing time is too short, the shear heat generated by the mixing is small, a large amount of excess volatile components in the PVA resin powders tend to remain, resulting in a material with a large amount of impurities. Moreover, when the mixing time is too long, heat is excessively applied to the PVA resin, and the YI value tends to increase.

Moreover, in the case of blending a plasticizer, there are a method of blending the plasticizer in a dividing manner and a method of blending the plasticizer in one batch, and the method of blending the plasticizer in a dividing manner is preferred from the viewpoint of uniform mixing. When the plasticizer is blended, it is preferable to further extend the mixing time described above by 5 to 60 minutes.

Next, the granulation step (2) is described. The granulation step is a step of granulating the material mixed in the mixing step (1).

As a granulation method, a method of granulating by pressing is preferred, and compression granulation such as tableting and briquetting, or extrusion granulation by pressing the materials with a screw or a roll and extruding the materials from a hole in a die can be mentioned. Extrusion granulation is preferred from the viewpoint that shear heating hardly occurs.

Examples of a granulation machine used in the extrusion granulation include a roll type extrusion granulator such as disk pelleter, and a screw type extrusion granulator, and the roll type extrusion granulator is preferred from the viewpoint that shear heating hardly occurs.

The roll type extrusion granulator has a cylindrical die disposed horizontally on a ground line. The die has a plurality of holes and rotates. About 1 to 4 rolls are disposed on the die to come into contact with the die, and generally, the rolls only rotate rather than revolving.

The material supplied onto the die is scraped between the die and the roll, and is continuously extruded and granulated from the holes of the die in order. A knife cutter is disposed on a lower portion of the die, and the pellets are cut to have an appropriate length.

The shape of the hole of the die can be appropriately changed depending on physical properties of the materials. The diameter of the hole of the die decreases toward the lower portion of the die, and it is possible to apply pressure and perform granulation.

The diameter of the hole of the die varies between the upper portion and the lower portion of the die, and the maximum diameter is generally 0.5 to 10 mm, preferably 2 to 4 mm, and the minimum diameter is generally 0.1 to 8 mm, preferably 1 to 3 mm.

The temperature of the die is generally 20 to 100°C, preferably 40 to 80°C at the upper portion of the die, and is generally 40 to 120°C, preferably 60 to 100°C at the lower portion of the die.

The rotational speed of the roll is generally 20 to 200 rpm, preferably 50 to 120 rpm.

As the roll type extrusion granulator, for example, a disk pelletizer (F-5-S/11-175D, manufactured by Dalton Corporation) can be used.

Finally, the drying step (3) is described. Particles obtained in the granulation step (2) are dried, and thereby the PVA resin composition pellets of the present invention can be obtained.

Examples of the drying method include hot air drying, dehumidification drying, and vacuum drying, and among them, the hot air drying is preferred from the viewpoint of production efficiency. Temperature of hot air is generally 80 to 150°C, preferably 90 to 110°C. Moreover, the drying time is generally 10 to 120 minutes, preferably 20 to 60 minutes.

As the hot air dryer, for example, a hot air flow drier (trade name: MDG-80, manufactured by Dalton Corporation) can be used.

Thus, the PVA resin composition pellets of the present invention can be obtained by the method described above, and the PVA resin composition pellets have both two characteristics: low coloring properties and high hardness.

### Examples

Hereinafter, the present invention will be described with reference to examples. However, the present invention is not limited to the descriptions of the examples unless the present invention exceeds the gist.

In the following descriptions, "part" and "%" refer to a mass basis unless otherwise specified.

### [Example 1]

### [Production of PVA Resin]

### <PVA Resin 1>

To a reaction vessel equipped with a reflux condenser, a dropping funnel, and a stirrer, 85 parts of vinyl acetate (initial charge of 10% of the total), 460 parts of methanol, and 7.6 parts of 3,4-diacetoxy-1-butene were charged, 0.32 parts of azobisisobutyronitrile was added, the temperature was raised under a nitrogen stream while stirring was performed, and polymerization started. Further, 765 parts of vinyl acetate were added dropwise for eight hours (dropping speed: 95.6 parts/hr) after polymerization started for 0.5 hours. 0.2 parts of azobisisobutyronitrile were respectively added at a time point of 2.5 hours and a time point of 4.5 hours after the start of polymerization, m-dinitrobenzene was added by 10 ppm relative to the monomer mass to terminate the polymerization when the vinyl acetate polymerization rate reached 85%, and subsequently, unreacted vinyl acetate monomers were removed from the system by distillation while blowing methanol vapor, thereby obtaining a methanol solution of the copolymer.

Then, the above solution was diluted with methanol and adjusted to have a solid content concentration of 50%, the methanol solution was added into a kneader, the solution temperature was maintained at 35°C, and a methanol solution of sodium hydroxide, which has a sodium concentration of 2% by mass, was added in a ratio of 9 mmol of sodium hydroxiden to 1 mol (total amount) of vinyl acetate structural units and 3,4-diacetoxy-1-butene structural units in the copolymer, thereby performing saponification. When the saponification proceeded, and the saponified product was precipitated and became particulate, the methanol solution of sodium hydroxide, which has a sodium concentration of 2% by mass, was added in a ratio of 4 mmol of sodium hydroxide to 1 mol (total amount) of vinyl acetate structural units and 3,4-diacetoxy-1-butene structural units, and saponification was performed. Then, acetic acid for neutralization in an amount of 0.8 equivalent of sodium hydroxide was added, and filtration, good washing with methanol, and drying by a hot air drier were performed, thereby obtaining a PVA resin 1 having a 1,2-diol structure at the side chain.

The saponification degree of the obtained PVA resin 1 having a 1,2-diol structure at the side chain was 86 mol% when analyzed according to the amount of alkaline consumption required for hydrolysis of residual vinyl acetate and 3,4-diacetoxy-1-butene structural units in the resin. Moreover, the average polymerization degree was 350 when analyzed according to JIS K 6726.

The content of 1,2-diol structural units represented by the general formula (1) was 3 mol% when calculated from an integral value measured by ¹H-NMR (300 MHz proton NMR, d₆-DMSO solution, internal standard substance: tetramethylsilane, 50°C).

The bulk specific gravity of the PVA resin 1 was measured by an apparent specific gravity measurement method in accordance with JIS K6892.

### [Method of Producing PVA Resin Composition Pellets]

### (1) Mixing Step

Powders of the PVA resin 1 were added into a Hensyl mixer (trade name: Hensyl mixer, manufactured by Santec Corporation). When an additive is added, the additive was gradually added after the addition of the powders of the PVA resin 1, stirred, and uniformly mixed with the powders. Then, stirring was continued for 30 minutes to prepare materials of the PVA resin composition pellets.

### (2) Granulation Step

The materials mixed as described above were added into a disk pelleter (trade name: F-5-S/11-175D, manufactured by Techno-Paul Dalton Co., Ltd.), and the disk pelleter operated under conditions shown in Table 1 and performed granulation.

### (3) Drying Step

The granulated product was dried with a fluid dryer (trade name: MDG-80, manufactured by Dalton Corporation) for 40 minutes to prepare the PVA resin composition pellets.

### [Table 1]

**Table 1 operation condition of disk pelleter**

| | | |
|---|---|---|
| Kneading | Mixer rotational speed (rpm) | 500 |
| | Kneading time (min) | 15 |
| | Mixing machine load (A) | 5 to 7 |
| Granulation | Granulator | F-5 |
| | | Use flat roller |
| | Die condition | φ 3 to 15 mm T |
| | Roller rotational speed (rpm) | 90 |
| | Granulator load (A) Low/High | 10 to 16 |
| | Die temperature (°C) | Surface: 69°C |
| | | Back: 85°C |
| | Granulation speed (wet kg/1 Batch) | 10 |
| | Apparent specific gravity | 0.294 |
| Drying | Processing amount (wet kg/1 Batch) | Total amount |
| | Hot air temperature (°C) | 105 |
| | Time (min) | 40 |
| | Exhaust gas temperature (°C) | 90 < |

### [Evaluation]

### [Hardness of PVA Resin Composition Pellets]

The hardness of the PVA resin composition pellets were measured under the conditions of 23°C and 50% RH by a tablet hardness meter (trade name: PC-30, manufactured by Okada Seiko Co., Ltd.). The results are shown in Table 2.

### [YI Value of PVA Resin Composition Pellets]

The PVA resin composition pellets were heated at a set temperature of the upper and lower press plates of 210°C and pressed at 5 kgf/cm² for two minutes by a hot press machine, and a plate of 2 cm × 5 cm × 2 mm was produced. The YI value of the plate was measured by a color difference meter (trade name: Spectrometer V-7200, manufactured by JASCO Corporation). The results are shown in Table 2.

### [Example 2]

The same procedure as in Example 1 and the same evaluation were performed except that the PVA resin used was changed to the following PVA resin 2. The results are shown in Table 2.

### <PVA Resin 2>

To a reaction vessel equipped with a reflux condenser and a stirrer, 76.6 parts of vinyl acetate (initial charge ratio 40%), 14.2 parts of methanol, and 9.2 parts of 3,4-diacetoxy-1-butene (initial charge ratio 40%) were charged, azobisisobutyronitrile was added in an amount of 0.068 mol% relative to charged vinyl acetate, the temperature was increased under a nitrogen stream while stirring was performed, vinyl acetate and 3,4-diacetoxy-1-butene in the remaining amount were dropped at a constant speed for 13.5 hours, and polymerization started. When the polymerization rate of vinyl acetate reached 91%, m-dinitrobenzene was added to complete polymerization, and subsequently unreacted vinyl acetate monomers were removed from the system by a method of blowing methanol vapor, thereby obtaining a methanol solution of the copolymer.

Then, the methanol solution was further diluted with methanol, adjusted to have a concentration of 50% and charged into a kneader, the solution temperature was maintained at 35°C, and a methanol solution of sodium hydroxide, which has a sodium concentration of 2% by mass, was added in a ratio of 4.5 mmol of sodium hydroxide to 1 mol (total amount) of vinyl acetate structural units and 3,4-diacetoxy-1-butene structural units in the copolymer, thereby performing saponification. When the saponification proceeded, and the saponified product was precipitated and became particulate, and filtration, good washing with methanol, and drying by a hot air drier were performed, thereby obtaining a PVA resin 2 having a 1,2-diol structure at the side chain.

The saponification degree of the obtained PVA resin 2 having a 1,2-diol structure at the side chain was 99 mol% when analyzed according to the amount of alkaline consumption required for hydrolysis of residual vinyl acetate and 3,4-diacetoxy-1-butene in the resin.

The average polymerization degree was 450 when analyzed according to JIS K 6726.

The content of 1,2-diol structural units represented by the general formula (1) was 6 mol% when calculated from an integral value measured by ¹H-NMR (300 MHz proton NMR, d₆-DMSO solution, internal standard substance: tetramethylsilane, 50°C).

Moreover, the bulk specific gravity of the PVA resin 2 was 0.65 g/ml when measured by an apparent specific gravity measurement method in accordance with JIS K6892.

### [Example 3]

The procedure was performed in the same manner as in Example 1 except that 4 parts by mass of glycerin were added to the PVA resin 1 (100 parts by mass) as a plasticizer during preparation of the materials.

### [Comparative Example 1]

The procedure was performed in the same manner as in Example 1 except that the PVA resin used was changed to the following PVA resin 3.

### <PVA Resin 3>

To a reaction vessel equipped with a reflux condenser, a dropping funnel, and a stirrer, 68.5 parts of vinyl acetate, 20.5 parts of methanol, 11.0 parts of 3,4-diacetoxy-1-butene (8 mol% relative to charged vinyl acetate) were charged under the conditions that an initial charge rate of vinyl acetate was 10%, and vinyl acetate and 3,4-diacetoxy-1-butene were dropped at a constant speed for nine hours, 0.3 mol% of azobisisobutyronitrile (relative to charged vinyl acetate) was added, and the temperature was raised under a nitrogen stream while stirring was performed, and polymerization started. When the polymerization rate of vinyl acetate reached 90%, m-dinitrobenzene was added by 10 ppm relative to the monomer mass to terminate the polymerization, and then unreacted vinyl acetate monomers were removed from the system by blowing methanol vapor, thereby obtaining a methanol solution of the copolymer.

Next, the methanol solution was diluted with methanol and adjusted to have a concentration of 55% by mass, a methanol solution of sodium hydroxide, which has a sodium concentration of 2% by mass, was added in a ratio of 10.5 mmol of sodium hydroxide to 1 mol (total amount) of vinyl acetate structural units and 3,4-diacetoxy-1-butene structural units in the copolymer, the mixture was uniformly mixed and poured into a belt, and saponification was performed while maintaining the atmospheric temperature at 40°C. When saponification proceeded and gelation proceeded to form a plate, cutting was performed with a rubber cutter and a comb cutter, thorough washing was performed with methanol, and drying was performed in a hot air dryer at 70°C for 12 hours, thereby obtaining a PVA resin 3 having a 1,2-diol structure at the side chain.

The saponification degree of the obtained PVA resin 3 having a 1,2-diol structure at the side chain was 99 mol% when analyzed with the amount of alkali consumption required for hydrolysis of residual vinyl acetate and 3,4-diacetoxy-1-butene structural units in the resin. The average polymerization degree was 300 when analyzed according to JIS K 6726. The melting point was 168°C when measured by a differential thermal analyzer DSC.

The content of 1,2-diol structural units represented by the general formula (1) was 8 mol% when calculated from an integral value measured by ¹H-NMR (300 MHz proton NMR, d₆-DMSO solution, internal standard substance: tetramethylsilane, 50°C).

The bulk specific gravity of the PVA resin 3 was 0.58 g/ml when measured by an apparent specific gravity measurement method in accordance with JIS K6892.

### [Comparative Example 2]

The procedure was performed in the same manner as in Example 1 except that the PVA resin used was changed to the following unmodified PVA resin, and the addition amount of the plasticizer glycerin was changed to 10 parts by mass relative to the unmodified PVA resin (100 parts by mass).

### <Production of Unmodified PVA Resin>

To a reaction vessel equipped with a reflux condenser, a dropping funnel, and a stirrer, 1000 parts of vinyl acetate, 140 parts of methanol, and 0.05 mol% of azobisisobutyronitrile (relative to charged vinyl acetate) were charged, the temperature was raised while stirring was performed under a nitrogen stream, and polymerization was performed at a boiling point for five hours. When the polymerization rate of vinyl acetate reached 95%, m-dinitrobenzene was added to terminate the polymerization, and then unreacted vinyl acetate monomers were removed from the system by a method of blowing methanol vapor, thereby obtaining a methanol solution of PVA (resin content: 41%).

Subsequently, the methanol solution was further diluted with methanol, adjusted to have a concentration of 33%, and charged into a kneader. The solution temperature was maintained at 40°C, and a 3.5% methanol solution of sodium hydroxide was added in a ratio of 2.0 mmol of sodium hydroxide to 1 mol of vinyl acetate structural units in the polymer, thereby performing saponification. When the saponification proceeded and the saponified product was precipitated and became particulate, filtration was performed by solid-liquid separation.

The saponification degree of the obtained PVA resin was 88 mol% when analyzed with the amount of alkali consumption required for hydrolysis of residual vinyl acetate, and the average polymerization degree was 550 when analyzed according to JIS K 6726.

The bulk specific gravity of the obtained PVA resin was measured by an apparent specific gravity measurement method in accordance with JIS K6892.

### [Comparative Example 3]

The procedure was performed in the same manner as in Comparative Example 2 except that the plasticizer glycerin was not added.

### [Comparative Example 4]

The procedure was performed in the same manner as in Comparative Example 2 except that PVA resin composition pellets were produced by melt-molding.

### [Comparative Example 5]

The procedure was performed in the same manner as in Comparative Example 1 except that PVA resin composition pellets were produced by melt-molding.

In Comparative Examples 4 and 5, melt-molding was performed under the following conditions.
Extruder: 15 mmϕ, L/D = 60, manufactured by Technovel Corporation
Extrusion temperature: C1/C2/C3/C4/C5/C6/C7/C8/D = 150/170/180/190/200/210/220/220/220°C
Rotational speed: 200 rpm
Discharge amount: 1.5 kg/h

### [Table 2]

**Table 2**

| | | PVA resin | | | | Plasticizer content (part) | Pellet production method | Evaluation | |
|---|---|---|---|---|---|---|---|---|---|
| | | Saponification degree (mol%) | Average polymerization degree | Modification ratio (mol%) | Bulk specific gravity (g/ml) | | | Intensity | YI value |
| Example | 1 | 86 | 350 | 3 | 0.68 | 0 | Compression | 330 N < | 21 |
| | 2 | 99 | 450 | 6 | 0.65 | 0 | Compression | 330 N < | 23 |
| | 3 | 86 | 350 | 3 | 0.68 | Glycerin 4 parts | Compression | 330 N < | 20 |
| Comparative example | 1 | 99 | 300 | 8 | 0.58 | 0 | Compression | 32 N | 27 |
| | 2 | 88 | 550 | 0 | 0.56 | Glycerin 10 parts | Compression | 36 N | 24 |
| | 3 | 88 | 550 | 0 | 0.56 | 0 | Compression | 32 N | 25 |
| | 4 | 99 | 450 | 6 | 0.65 | 0 | Compression | 330 N < | 65 |
| | 5 | 99 | 300 | 8 | 0.58 | 0 | Compression | 330 N < | 72 |

The PVA resin composition pellets of Examples 1 to 3 were pellets with excellent hardness, low YI value, and small coloration. In contrast, the PVA resin composition pellets of Comparative Examples 1 to 3 had a small YI value, but hardness thereof was inferior, and the PVA resin composition pellets of Comparative Examples 4 and 5 were excellent in hardness, had a large YI value and were colored.

Although the invention has been described in detail with reference to specific embodiments, it will be apparent to those skilled in the art that various changes and modifications can be made without departing from the spirit and scope of the invention. This application is based on Japanese Patent Application (Japanese Patent Application No. 2017-110412) filed June 2, 2017, the contents of which are incorporated herein by reference.

### Industrial Applicability

The PVA resin composition pellets of the present invention can be preferably used for molded materials in, for example, extrusion molding, injection molding, film molding (inflation film/T die cast film), profile molding, melt coating, blow molding, melt spinning, nonwoven fabric molding (spunbond, meltblown), and for forming molded products to which colors are added to.

## Claims

1. Polyvinyl alcohol resin composition pellets, which comprise a polyvinyl alcohol resin, and have hardness of 100 N or more at 23°C and 50% RH, and a yellow index value of 50 or less after being heated at 210°C and pressed at 5 kgf/cm² for two minutes.

2. The polyvinyl alcohol resin composition pellets according to claim 1, wherein the polyvinyl alcohol resin has a saponification degree of 70 mol% or more.

3. The polyvinyl alcohol resin composition pellets according to claim 1 or 2, further comprising a plasticizer in an amount of 0.1 to 8 parts by mass relative to 100 parts by mass of polyvinyl alcohol resin.

4. A method of producing polyvinyl alcohol resin composition pellets, the method comprising a step of compressing polyvinyl alcohol resin powders with a bulk specific gravity of 0.60 to 0.80 g/ml and performing cutting.
